(19) **Europäisches Patentamt**
**European Patent Office**
**Office européen des brevets**

(11) **EP 4 759 961 A1**

(12) **EUROPEAN PATENT APPLICATION**
published in accordance with Art. 153(4) EPC

(43) Date of publication:
**17.06.2026 Bulletin 2026/25**

(21) Application number: **24851334.3**

(22) Date of filing: **07.05.2024**

(51) International Patent Classification (IPC):
*C23C 2/06* (2006.01)      *C23C 2/40* (2006.01)
*C23C 2/02* (2006.01)      *C21D 9/46* (2006.01)
*C22C 18/00* (2006.01)      *C22C 18/04* (2006.01)
*C22C 38/00* (2006.01)      *C22C 38/02* (2006.01)
*C22C 38/04* (2006.01)      *C22C 38/06* (2006.01)
*C22C 38/12* (2006.01)      *C22C 38/14* (2006.01)
*C22C 38/58* (2006.01)      *B23K 11/16* (2006.01)

(52) Cooperative Patent Classification (CPC):
**C23C 2/06; B32B 15/013; C21D 9/46; C22C 18/00;**
**C22C 18/04; C22C 38/002; C22C 38/005;**
**C22C 38/02; C22C 38/04; C22C 38/06;**
**C22C 38/12; C22C 38/14; C22C 38/26;**
**C22C 38/28; C22C 38/32;**          (Cont.)

(86) International application number:
**PCT/JP2024/016974**

(87) International publication number:
**WO 2025/032900 (13.02.2025 Gazette 2025/07)**

(84) Designated Contracting States:
**AL AT BE BG CH CY CZ DE DK EE ES FI FR GB**
**GR HR HU IE IS IT LI LT LU LV MC ME MK MT NL**
**NO PL PT RO RS SE SI SK SM TR**
Designated Extension States:
**BA**
Designated Validation States:
**GE KH MA MD TN**

(30) Priority: **10.08.2023 JP 2023131214**

(71) Applicant: **Nippon Steel Corporation**
**Tokyo 100-8071 (JP)**

(72) Inventors:
• **MITSUNOBU, Takuya**
  **Tokyo 100-8071 (JP)**
• **KIREKAWA, Naoto**
  **Tokyo 100-8071 (JP)**
• **URANAKA, Masaaki**
  **Tokyo 100-8071 (JP)**
• **TAKEBAYASHI, Hiroshi**
  **Tokyo 100-8071 (JP)**

(74) Representative: **Vossius & Partner**
**Patentanwälte Rechtsanwälte mbB**
**Siebertstraße 3**
**81675 München (DE)**

(54) **PLATED STEEL SHEET**

(57)    The present invention addresses the problem of providing a plated steel sheet having good LME resistance and red rust resistance. A plated steel sheet according to the present invention is provided with a plating layer on one surface or both surfaces of a steel sheet and has a tensile strength of 780 MPa or more. The steel sheet has prescribed chemical components, and the plating layer contains Zn. In a GDS measurement in the thickness direction of the plated steel sheet, the depth at which the light emission intensity $B_x$ at a depth of x ($\mu$m) and the light emission intensity $B_{150}$ at a depth of 150 $\mu$m satisfy $B_x/B_{150} \geq 5.0$ is 0.5 $\mu$m or more from the interface between the steel sheet and the plating layer. The thickness of an oxide formed on the surface of the plating layer is 0.5 $\mu$m or less. An internal oxide layer having a thickness of 1.0 $\mu$m or more exists in the thickness direction of the steel sheet from the interface.

Fig. 1

(52) Cooperative Patent Classification (CPC): (Cont.)
**C22C 38/34; C22C 38/38; C23C 2/02; C23C 2/40;**
B23K 11/16

**Description**

FIELD

The present invention relates to a plated steel sheet.

BACKGROUND

In recent years, the steel sheet used in automobiles, household electric appliance products, building materials, and other various fields has been made higher in strength. For example, in the automobile field, use of high strength steel sheet has been increasing for the purpose of lightening the weight of vehicle bodies for improving fuel efficiency.

In particular, in the automobile field, sometimes a steel sheet given galvanization is spot welded for use. In welding of a steel sheet given galvanization, in particular a high strength steel sheet, for example, as described in PTL 1, the drop in weldability due to liquid metal embrittlement (LME) cracking sometimes becomes a problem. LME cracking is believed to be caused by the surface layer part of a steel sheet transforming to austenite at the time of welding, molten zinc penetrating the grain boundaries causing the steel sheet to become embrittled, and further a tensile stress being applied to the steel sheet at the time of welding.

Note that PTL 2 discloses a steel sheet suppressed in LME cracking and improved in weldability which has particle size 20 nm or more Si oxide grains present at the surface layer part of the steel sheet in a 3000 to 6000/mm$^2$ number density in a suitable grain size distribution.

[CITATION LIST]

[PATENT LITERATURE]

[PTL 1] WO2019/116531
[PTL 2] WO2020/218575

SUMMARY

[TECHNICAL PROBLEM]

The present invention has as its object the provision of a plated steel sheet excellent in LME resistance.

[SOLUTION TO PROBLEM]

Improvement of the LME resistance of a plated steel sheet has been studied from various angles. As opposed to this, in the present invention, it was discovered that it is preferable to make B concentrate at the surface layer of the steel sheet forming the plated steel sheet. It was discovered that to make B concentrate at the surface layer of a steel sheet, in the annealing, it is effective to not allow external oxidation to proceed at the surface of the steel sheet but to cause oxidation to proceed at the surface layer of the steel sheet toward the inside of the steels sheet for internal oxidation. The gist of the present invention is as follows:

[1] A plated steel sheet provided with a steel sheet and a plating layer provided on one surface or both surfaces of the steel sheet, in which plated steel sheet, a tensile strength is 780 MPa or more, a chemical composition of the steel sheet contains, by mass%, C: 0.05 to 0.40%, Si: 0.7 to 3.0%, Mn: 0.1 to 5.0%, sol. Al: 0 to 2.0%, P: 0.0300% or less, S: 0.0300% or less, N: 0.0100% or less, B: 0.0005 to 0.0050%, Ti: 0.0010 to 0.1000%, Nb: 0 to 0.2000%, V: 0 to 0.15%, Cr: 0 to 2.00%, Ni: 0 to 2.00%, Cu: 0 to 2.00%, Mo: 0 to 1.00%, W: 0 to 1.00%, Ca: 0 to 0.1000%, Mg: 0 to 0.100%, Zr: 0 to 0.100%, Hf: 0 to 0.100%, and REM: 0 to 0.100% and has a balance of Fe and impurities, the plating layer contains Zn, a depth where an emission intensity Bx at a depth x ($\mu$m) and an emission intensity B150 at a depth of 150 $\mu$m measured by GDS measurement in a thickness direction of the plated steel sheet satisfy Bx/B150≥5.0 ...(1) is 0.5 $\mu$m or more from an interface of the steel sheet and the plating layer, a thickness of oxides formed on the surface of the plating layer is 0.5 $\mu$m or less, and there is an internal oxide layer of a thickness of 1.0 $\mu$m or more in a thickness direction of the steel steel from the interface.

[2] The plated steel sheet of [1], wherein a depth where the emission intensity Bx and the emission intensity B150 satisfy Bx/B150≥5.0 is 2.0 $\mu$m or more from an interface of the steel sheet and the plating layer.

[3] The plated steel sheet of [1] or [2], wherein, a maximum value Bmax of the emission intensity of B in a range from an interface of the steel sheet and the plating layer down to a depth of 5.0 $\mu$m measured by GDS measurement in a thickness direction of the plated steel sheet satisfies Bmax/B150$\geq$8...(2)

[4] The plated steel sheet of any one of [1] to [3], wherein the plating layer contains, by mass%, Fe: 0 to 3.0%, Al: 0 to 30.0%, and Mg: 0 to 10.0% and has a balance of Zn and impurities.

[5] The plated steel sheet of [4], wherein the plating layer contains, by mass%, Al: 10.0 to 30.0% and Mg: 4.5 to 10.0%.

[ADVANTAGEOUS EFFECTS OF INVENTION]

According to the present invention, it is possible to obtain a plated steel sheet excellent in LME resistance.

BRIEF DESCRIPTION OF DRAWINGS

FIG. 1 is a view for showing one example of the distribution of B at a surface layer part of the plated steel sheet of the present invention.

FIG. 2 is a view for explaining a position of cracking covered in evaluation of LME resistance in an embodiment.

DESCRIPTION OF EMBODIMENTS

Below, one embodiment of the present invention will be explained. The present invention is not limited to the following embodiment. First, a summary of the improvement of LME resistance in the present embodiment will be explained.

If spot welding a plated steel sheet, along with the plating melting, the surface layer of the steel sheet will be heated and the steel sheet structures will transform to austenite. At that time, the molten plating will penetrate the steel sheet structures along the grain boundaries of the austenite and the crystal grain boundaries will become brittle. For this reason, if stress is applied to the steel sheet, LME cracking will easily occur at the crystal grain boundaries. In particular, it is believed that LME easily occurs since tensile stress is applied to steel sheet at the time of welding. The inventors came up with the idea of using B (below, sometimes also referred to as "boron") as the method of improving the LME resistance. Specifically, they came up with the idea of making B segregate at the Fe grain boundaries in the surface layer structures (austenite grain boundaries or ferrite grain boundaries) so as to suppress penetration of molten zinc to the Fe grain boundaries and suppress occurrence of LME. Note that, in this Description, the "surface layer" means the range from the surfacemost part of the steel sheet down to 100 $\mu$m or so in the sheet thickness direction.

In general, in boron steel, in particular when heating to the austenite temperature region, there is known a deboronation phenomenon where the amount of B near the surface decreases. As a result, in general, in boron steel, the concentration of B at the steel surface layer falls compared with the center part of the steel sheet. In the present embodiment, internal oxidation, which easily proceeds at the crystal grain boundaries at the surface layer of a steel sheet when annealing the steel sheet, is caused toward the inside direction of the steel sheet. Due to this, an internal oxide layer is formed inside the surface layer of the steel sheet, therefore in particular it becomes possible to fix the Si causing the LME resistance to degrade as oxides at the internal oxide layer. Furthermore, the oxides formed by the internal oxidation take in the B diffusing from inside the steel sheet to the surface layer due to heating, whereby the deboronation phenomenon is suppressed. In this way, opposite to usual boron steel, a region where B is concentrated is formed at the surface layer of the steel. Due to the effect of the combination of these factors, the LME resistance is improved.

Usually, when heating a steel sheet like with annealing, oxides (scale) are formed at the steel sheet surface as external oxidation. In the present embodiment, it was found that by imparting strain to the surface layer of a steel sheet in advance to promote the diffusion of oxygen to the inside of the material and performing annealing at a suitable dew point, it is possible to promote internal oxidation without promoting external oxidation. Based on this finding, the above-mentioned structures of the surface layer of steel sheet were realized.

Below, the present embodiment will be explained in detail.

<<Plated Steel Sheet>>

Below, a plated steel sheet of the present embodiment will be explained in detail. The plated steel sheet of the present embodiment is provided with a steel sheet and a plating layer provided on one surface or both surfaces of the steel sheet.

[Tensile Strength]

The present embodiment suppresses LME occurring in a high strength steel sheet, therefore the high strength steel sheet specifically has a 780 MPa or more tensile strength. The upper limit of the tensile strength is not particularly prescribed, but from the viewpoint of securing toughness, it may for example be 2000 MPa or less. The tensile strength is measured by taking a JIS No. 5 tensile test piece having a direction perpendicular to the rolling direction as its longitudinal direction and performing a test based on JIS Z 2241: 2011. The tensile strength may also be 980 MPa or more or 1180 MPa or more.

[Chemical Composition of Steel Sheet]

Below, the chemical composition of the steel sheet forming part of the plated steel sheet of the present embodiment will be explained. Below, the "%" relating to the chemical composition of the steel sheet shall mean "mass%". Further, in the numerical ranges in the chemical composition, a numerical range expressed using "to" will mean a range including the numerical values before and after the "to" as an upper limit value and a lower limit value.

(C: 0.05 to 0.40%)

C (carbon) is an element securing the strength of steel. To obtain the 780 MPa or more of tensile strength targeted by the present embodiment, the content of C is 0.05% or more. Considering the weldability, the content of C is 0.40% or less. The content of C may also be 0.08% or more, 0.10% or more, or 0.15% or more. The content of C may also be 0.37% or less, 0.35% or less, or 0.30% or less.

(Si: 0.7 to 3.0%)

Si (silicon) is an element suppressing the deboronation phenomenon by internal oxidation. Further, it is an element improving the corrosion resistance of steel. Due to this, the later explained B distribution is formed at the surface layer of the steel sheet. To obtain this effect, the content of Si is 0.7% or more. If the content of Si is too large, since Si is an element generally lowering the LME resistance, the effect of the B distribution explained later is obstructed and the effect of improvement of the LME resistance becomes smaller. Considering this point, the content of Si is 3.0% or less. The content of Si may also be 0.8% or more, 0.9% or more, or 1.0% or more. The content of Si may also be 2.8% or less, 2.5% or less, or 2.0% or less.
In the past, it had been known that the LME resistance is made to fall by addition of Si into the steel. The inventors studied this and as a result, opposite to the conventional knowledge, discovered that the LME resistance is improved by including Si in large amounts. This is believed to be due to the later explained inclusion of B and method of production causing B to concentrate at the surface layer part and segregate at the Fe grain boundaries.

(Mn: 0.1 to 5.0%)

Mn (manganese) is an element effective for obtaining hard structures and improving the strength of the steel. Further, in the same way as Si, it is also an element inhibiting the deboronation phenomenon by internal oxidation. To obtain these effects, the lower limit of the content of Mn is 0.1% or more. Further, considering the drop in formability due to Mn segregation, the content of Mn is 5.0% or less. The content of Mn may also be 0.5% or more, 1.0% or more, or 1.5% or more. The content of Mn may also be 4.5% or less, 4.0% or less, or 3.5% or less.

(sol. Al: 0 to 2.0%)

Al (aluminum) is an element which dissolves in steel and promotes ferrite stabilization and decarburization. Due to this, it is possible to improve the LME resistance, therefore this may be contained in accordance with need. "sol. Al" means acid soluble Al not forming $Al_2O_3$ or other oxides and able to be dissolved by acid. It is found as Al measured after deducting the insoluble residue on the filter paper formed in the process of analysis of Al. Inclusion of sol. Al is not essential. The lower limit of the content of sol. Al is 0. To obtain the effect of inclusion, the content of sol. Al may be 0.1% or more, 0.2% or more, or 0.3% or more. If the content of sol. Al is too great, even if performing the later explained high dew point annealing, external oxidation proceeds, oxides (scale) are formed at the surface layer of the steel sheet, and the LME resistance falls. Considering this point, the content of sol. Al is 2.0% or less. The content of Al may also be 1.5% or less, 1.2% or less, or 1.0% or less.

(P: 0.0300% or Less)

P (phosphorus) is an impurity generally contained in steel. If the content of P is more than 0.0300%, the weldability is liable to fall. Therefore, the content of P is 0.0300% or less. The content of P may also be 0.0200% or less, 0.0100% or less, or 0.0050% or less. P is preferably not contained. The lower limit of the content of P is 0. From the viewpoint of the dephosphorization cost, the content of P may be more than 0% or 0.0001% or more.

(S: 0.0300% or Less)

S (sulfur) is an impurity generally contained in steel. If the content of S is more than 0.0300%, the weldability is liable to fall and further the amount of precipitation of MnS is liable to increase and the bendability and other formability to fall. Therefore, the content of S is 0.0300% or less. The content of S may also be 0.0100% or less, 0.0050% or less, or 0.0020% or less. S is preferably not contained. The lower limit of the content of S is 0. From the viewpoint of the desulfurization cost, the content of S may be more than 0% or 0.0001% or more.

(N: 0.0100% or Less)

N (nitrogen) is an impurity generally contained in steel. If the content of N is more than 0.0100%, the weldability is liable to fall. Therefore, the content of N is 0.0100% or less. The content of N may also be 0.0080% or less, 0.0050% or less, or 0.0030% or less. N is preferably not contained. The lower limit of the content of N is 0. From the viewpoint of the production cost, the content of N may be more than 0% or 0.0010% or more.

(B: 0.0005 to 0.0050%)

B (boron) is an element raising the quenchability to contribute to the improvement of strength and, further, segregating at the grain boundaries to strength the grain boundaries and improve the toughness. Further, in the plated steel sheet of the present embodiment, it concentrates at the surface layer of the steel sheet and is present segregated at the Fe grain boundaries. To obtain this effect, the content of B is 0.0005% or more. From the viewpoint of the toughness and weldability, the content of B is 0.0050% or less. The content of B may also be 0.0006% or more, 0.0008% or more, or 0.0010% or more. The content of B may also be 0.0040% or less, 0.0030% or less, or 0.0020% or less.
In general, at the steel surface layer, the deboronation phenomenon causes the concentration of B to fall compared with the center part of the steel sheet. In the present embodiment, using the later explained method of production, internal oxidation toward the inside of the steel sheet is promoted in the annealing step to cause B to be taken in at the oxides and suppress the deboronation phenomenon and form the later explained distribution of concentration at the surface layer of the steel. The B segregated at the Fe grain boundaries is believed to suppress LME.

(Ti: 0.0010 to 0.1000%)

Ti (titanium) is an element precipitating as TiC during cooling of steel and contributing to improvement of the strength. To obtain this effect, the content of Ti is 0.0010% or more. If excessively added, coarse TiN is formed and the toughness is liable to be impaired, therefore the content of Ti is 0.1000% or less. The content of Ti may also be 0.0020% or more, 0.0030% or more, 0.0040% or more, 0.0080% or more, 0.0110% or more, or 0.0130% or more. The content of Ti may also be 0.0900% or less, 0.0800% or less, 0.0600% or less, 0.0500% or less, or 0.0400% or less.

(Nb: 0 to 0.2000%)

Nb (niobium) is an element contributing to improvement of strength through improvement of the quenchability, therefore may be contained in accordance with need. It is not an essential element, therefore the lower limit of the content of Nb is 0. This effect is obtained even with a trace amount of content, but if contained, the content of Nb may be 0.0001% or more, 0.0002% or more, 0.0003% or more, 0.0004% or more, or 0.0010% or more. On the other hand, from the viewpoint of securing the toughness, the content of Nb is 0.2000% or less. The content of Nb may also be 0.1500% or less, 0.1000% or less, 0.0600% or less, 0.0400% or less, 0.0200% or less, 0.0100% or less, 0.0050% or less, 0.0030% or less, or 0.0020% or less.

(V: 0 to 0.15%)

V (vanadium) is an element contributing to improvement of strength through improvement of the quenchability, therefore may be contained in accordance with need. It is not an essential element, therefore the lower limit of the content of V is 0. This effect is obtained even with a trace amount of content, but if contained, the content of V may be 0.001 % or more, 0.01% or more, 0.03% or more, 0.05% or more, or 0.06% or more. From the viewpoint of securing the toughness, the content of V is 0.15% or less. The content of V may also be 0.14% or less, 0.13% or less, 0.12% or less, 0.11% or less, or 0.10% or less.

(Cr: 0 to 2.00%)

Cr (chromium) is effective for raising the quenchability of steel to raise the strength of the steel, therefore may be contained in accordance with need. It is not an essential element, therefore the lower limit of the content of Cr is 0. This effect is obtained even with a trace amount of content, but if contained, the content of Cr may be 0.001% or more, 0.01% or more, 0.05% or more, 0.07% or more, or 0.10% or more. If excessively containing Cr, Cr carbides are formed in large amounts and conversely the quenchability is liable to be impaired, therefore the content of Cr is 2.00% or less. The content of Cr may also be 1.80% or less, 1.50% or less, 1.20% or less, 0.80% or less, 0.60% or less, 0.50% or less, 0.30% or less, or 0.20% or less.

(Ni: 0 to 2.00%)

Ni (nickel) is effective for raising the quenchability of steel to raise the strength of the steel, therefore may be contained in accordance with need. It is not an essential element, therefore the lower limit of the content of Ni is 0. This effect is obtained even with a trace amount of content, but if contained, the content of Ni may be 0.001% or more, 0.01% or more, 0.02% or more, 0.03% or more, 0.04% or more, or 0.05% or more. Excessive addition of Ni causes the costs to rise, therefore the content of Ni is 2.00% or less. The content of Ni may also be 1.80% or less, 1.50% or less, 1.20% or less, 0.80% or less, 0.60% or less, 0.50% or less, 0.40% or less, 0.20% or less, or 0.15% or less.

(Cu: 0 to 2.00%)

Cu (copper) is effective for raising the quenchability of steel to raise the strength of the steel, therefore may be contained in accordance with need. It is not an essential element, therefore the lower limit of the content of Cu is 0. This effect is obtained even with a trace amount of content, but if contained, the content of Cu may be 0.001% or more, 0.01% or more, 0.02% or more, 0.03% or more, 0.05% or more, or 0.07% or more. From the viewpoint of suppression of a drop in toughness or cracking of the slab after casting or a drop in weldability, the content of Cu is 2.00% or less. The content of Cu may also be 1.80% or less, 1.50% or less, 1.20% or less, 1.00% or less, 0.80% or less, 0.60% or less, 0.50% or less, 0.30% or less, or 0.20% or less.

(Mo: 0 to 1.00%)

Mo (molybdenum) is effective for raising the quenchability of steel to raise the strength of the steel, therefore may be contained in accordance with need. It is not an essential element, therefore the lower limit of the content of Mo is 0. This effect is obtained even with a trace amount of content, but if contained, the content of Mo may be 0.001% or more, 0.01% or more, 0.02% or more, 0.03% or more, 0.05% or more, or 0.06% or more. From the viewpoint of suppressing a drop in toughness, the content of Mo is 1.00% or less. The content of Mo may also be 0.80% or less, 0.60% or less, 0.40% or less, 0.30% or less, 0.20% or less, or 0.15% or less.

(W: 0 to 1.00%)

W (tungsten) is effective for raising the quenchability of steel to raise the strength of the steel, therefore may be contained in accordance with need. It is not an essential element, therefore the lower limit of the content of W is 0. This effect is obtained even with a trace amount of content, but if contained, the content of W may be 0.001% or more, 0.01% or more, 0.02% or more, or 0.03% or more. From the viewpoint of suppressing a drop in toughness, the content of W is 1.00% or less. The content of W may also be 0.80% or less, 0.60% or less, 0.40% or less, 0.30% or less, 0.20% or less, 0.15% or less, or 0.10% or less.

(Ca: 0 to 0.1000%)

Ca (calcium) is an element contributing to the control of inclusions, in particular the fine dispersion of inclusions, and having the action of raising the toughness, therefore may be contained in accordance with need. It is not an essential element, therefore the lower limit of the content of Ca is 0. This effect is obtained even with a trace amount of content, but if contained, the content of Ca may also be 0.0001% or more, 0.0005% or more, 0.0010% or more, 0.0020% or more, 0.0040% or more, 0.0060% or more, or 0.0070% or more. If excessively including Ca, sometimes deterioration of the surface properties surfaces, therefore the content of Ca is 0.1000% or less. The content of Ca may also be 0.0800% or less, 0.0600% or less, 0.0500% or less, 0.0400% or less, 0.0300% or less, or 0.0200% or less.

(Mg: 0 to 0.100%)

Mg (magnesium) is an element contributing to the control of inclusions, in particular the fine dispersion of inclusions, and having the action of raising the toughness, therefore may be contained in accordance with need. It is not an essential element, therefore the lower limit of the content of Mg is 0. This effect is obtained even with a trace amount of content, but if contained, the content of Mg may be 0.0001% or more, 0.0005% or more, or 0.001% or more. If excessively containing Mg, sometimes deterioration of the surface properties surfaces, therefore the content of Mg may also be 0.100% or less, 0.090% or less, 0.080% or less, 0.060% or less, 0.040% or less, 0.030% or less, 0.020% or less, 0.010% or less, 0.005% or less, 0.003% or less, or 0.002% or less.

(Zr: 0 to 0.100%)

Zr (zirconium) is an element contributing to the control of inclusions, in particular the fine dispersion of inclusions, and having the action of raising the toughness, therefore may be contained in accordance with need. It is not an essential element, therefore the lower limit of the content of Zr is 0. This effect is obtained even with a trace amount of content, but if contained, the content of Zr is preferably 0.001% or more, 0.003% or more, 0.005% or more, 0.008% or more, or 0.010% or more. On the other hand, if excessively containing Zn, sometimes deterioration of the surface properties surfaces, therefore the content of Zr is 0.100% or less. The content of Zr may also be 0.090% or less, 0.080% or less, 0.060% or less, 0.050% or less, 0.040% or less, or 0.030% or less.

(Hf: 0 to 0.10%)

Hf (hafnium)is an element contributing to the control of inclusions, in particular the fine dispersion of inclusions, and having the action of raising the toughness, therefore may be contained in accordance with need. It is not an essential element, therefore the lower limit of the content of Hf is 0. This effect is obtained even with a trace amount of content, but if contained, the content of Hf may also be 0.001% or more, 0.002% or more, or 0.005% or more. If excessively containing Hf, sometimes deterioration of the surface properties surfaces, therefore the content of Hf is 0.10% or less, 0.08% or less, 0.06% or less, 0.05% or less, 0.04% or less, 0.03% or less, or 0.02% or less.

(REM: 0 to 0.100%)

A REM (rare earth element) is an element contributing to control of inclusions, in particular to finely dispersing inclusions, and having the action of raising the toughness, therefore may be contained in accordance with need. It is not an essential element, therefore the lower limit of the content of a REM is 0%. This effect is obtained even when contained in a trace amount, but if contained, the content of a REM may also be 0.001% or more, 0.002% or more, 0.003% or more, or 0.005% or more. If excessively containing a REM, sometimes deterioration of the surface properties surfaces, therefore the content of a REM is 0.100% or less. The content of a REM may also be 0.090% or less, 0.080% or less, 0.060% or less, 0.050% or less, 0.040% or less, 0.030% or less, 0.020% or less, 0.015% or less, or 0.010% or less. Note that "REM" is an abbreviation for a rare earth metal and means an element belonging to the lanthanoids. A REM is usually added as a misch metal.

(Balance)

In the steel sheet according to the present embodiment, the balance beside the above chemical composition is Fe and impurities. Here, "impurities" are constituents entering due to various factors in the production process such as the ore, scraps, and other such starting materials when industrially producing steel sheet and not having a detrimental effect on the LME cracking of the steel sheet according to the present embodiment. That is, they mean constituents contained in a range giving the LME resistance sought in the steel sheet of the present embodiment. As a specific element, for example, O (oxygen) may be mentioned. The content of O contained as an impurity may also be 0.0500% or less, 0.0300% or less, 0.0200% or less, or 0.0100% or less. However, from the viewpoint of the production costs, the lower limit of the content of O may be 0.00001% or more, 0.00005% or more, or 0.0001% or more.

(Method of Analysis of Chemical Composition)

The chemical composition of the steel sheet may be analyzed using an elemental analysis method known to persons skilled in the art. For example, it is analyzed by inductively coupled plasma mass spectrometry (ICP-MS method). However, C and S may be measured using the combustion-infrared absorption method, while N can be measured using the inert gas melting-thermal conductivity method. For O, the inert gas melting-infrared absorption method is used. These analyses may be performed on a sample taken from the steel sheet by a method based on JIS G0417: 1999.

[Plating Layer]

The plated steel sheet of the present embodiment comprises the above-mentioned sheet steel on which a plating layer is provided. The plating layer may be formed on one surface of the steel sheet or may be formed on both surfaces. The plated steel sheet of the present embodiment is mainly used in the automobile field. The plating is not particularly limited so long as a Zn-based plating containing Zn. As elements other than Zn, for example, Fe, Al, Mg, Si, Ni, Sn, and other elements generally contained in a Zn plating may be contained. Further, the elements contained in the steel sheet may be diffused and may be contained in the plating. The content of Zn may be 50% or more or may be 55% or more or 60% or more.

[Chemical Composition of Plating Layer]

Below, one example of the chemical composition of the plated steel sheet of the present embodiment will be explained. The "%" relating to the content of the elements unless otherwise indicated means "mass%". Further, in the numerical ranges in the chemical composition regarding the plating layer, a numerical range expressed using "to" unless otherwise indicated will mean a range including the numerical values before and after the "to" as an upper limit value and a lower limit value.

(Fe: 0 to 3.0%)

Fe may be contained in the plating layer by diffusion from the steel sheet if heat treating the plated steel sheet after forming a plating layer containing Zn on the steel sheet. Therefore, in the state with no heat treatment performed, Fe is not contained in the plating layer, therefore the lower limit of the content of Fe is 0. Further, the content of Fe is 3.0% or less. The content of Fe may also be 2.0% or less or 1.0% or less.

In general, galvanized steel sheet is often required to be corrosion resistant. Therefore, it is possible to introduce Al or Mg in the plating layer to improve the corrosion resistance of plated steel sheet.

(Al: 0 to 30.0%)

Al is an element which, by addition combined with Zn, improves the corrosion resistance of the plating layer, therefore may be contained in accordance with need. Inclusion is not essential, therefore the lower limit of the content of Al is 0. If containing Al, to form a plating layer containing Zn and Al, the content of Al is preferably 0.01% or more. If the content of Al becomes too great, the effect of improvement of the corrosion resistance becomes saturated, therefore the content of Al is 30.0% or less. The content of Al may also be 1.0% or more, 3.0% or more, 5.0% or more, 10.0% or more, or 15.0% or more. The content of Al may also be 25.0% or less or 20.0% or less.

(Mg: 0 to 10.0%)

Mg is an element which, by addition combined with Zn and Al, improves the corrosion resistance of the plating layer, therefore may be contained in accordance with need. Inclusion is not essential, therefore the lower limit of the content of Mg is 0. If containing Mg, to form a plating layer containing Zn, Al, and Mg, the content of Mg is preferably 0.01% or more. If the content of Mg becomes too great, defects in appearance and nonplating defects sometimes occur, therefore the content of Mg is 10.0% or less. The content of Mg may also be 1.0% or more, 2.0% or more, 3.0% or more, 4.5% or more, or 5.0% or more. The content of Mg may also be 8.0% or less or 6.0% or less.

In one example of the chemical composition of a plating suitable for the plated steel sheet of the present embodiment, the balance besides the above compositions is Zn and impurities. The "impurities" in the plating layer mean constituents entering due to various factors in the production process such as the starting materials when producing the plating layer and not constituents intentionally added to the plating layer. For example, when elements other than the Zn, Fe, Al, and Mg contained in the steel sheet diffuse and are contained in the plating layer, they correspond to impurities. In one example of the chemical composition of the plating suitable for the plated steel sheet of the present embodiment, as impurities, elements other than the essential constituents and optional constituents explained above may also be contained in trace amounts in a range not obstructing the effects of the present embodiment.

(Method of Analysis of Chemical Composition)

The chemical composition of the plating layer can be determined by dissolving the plating layer in an acid solution to which an inhibitor for inhibiting corrosion of the steel sheet has been added and measuring the obtained solution by ICP (high frequency inductively coupled plasma) spectrometry.

[Thickness of Plating Layer]

The thickness of the plating layer may for example be 3 to 50 $\mu$m. Further, the amount of deposition of the plating layer is not particularly limited, but for example may be 10 to 170 g/m$^2$ per surface. In the present invention, the amount of deposition of the plating layer is determined by dissolving the plating layer in an acid solution to which an inhibitor for suppressing corrosion of the material steel sheet has been added and finding the change in weight before and after the plating layer is pickled and peeled off. As the acid solution to which the inhibitor has been added, for example, for example a 10% hydrochloric acid solution to which 0.06 mass% of an inhibitor (ibit 710K made by Asahi Chemical) has been added may be used. After removing the plating layer, the base steel sheet is rinsed and dried.

The thickness of the plating layer may be 5 $\mu$m or more, 7 $\mu$m or more, or 10 $\mu$m or more. The thickness of the plating layer may also be 45 $\mu$m or less, 40 um or less, 35 $\mu$m or less, 30 $\mu$m or less. The amount of deposition of the plating layer may be 15 g/m$^2$ or more, 20 g/m$^2$ or more, 25 g/m$^2$ or more, or 30 g/m$^2$ or more per surface. The amount of deposition of the plating layer may also be 160 g/m$^2$ or less, 140 g/m$^2$ or less, 120 g/m$^2$ or less, or 100 g/m$^2$ or less per surface.

[B Distribution of Surface Layer]

In the plated steel sheet of the present embodiment, in measurement by GDS (high frequency glow discharge spectrometry) in the thickness direction of the plated steel sheet, the depth satisfying the following formula (1) is 0.5 $\mu$m or more from the interface of the steel sheet and plating layer.

$$Bx/B150 \geq 5.0 \ \ldots(1)$$

In the above formula (1), Bx indicates the emission intensity at a point separated from the interface of the steel sheet and plating layer by a depth x ($\mu$m) in a thickness direction of the steel sheet. Further, B150 indicates the emission intensity at a point separated from the interface of the steel sheet and plating layer by a depth of 150 $\mu$m in the thickness direction of the steel sheet. Note that, the "thickness direction" in the present embodiment means the direction vertical to the interface of the steel sheet and plating layer. The "point separated from the interface of the steel sheet and plating layer in the thickness direction of the steel sheet" is the point separated toward the center direction of the steel sheet thickness.

The left side of the above formula (1) shows the ratio of the B concentration at the depth "x" with respect to the B concentration at the depth 150 $\mu$m. That is, Bx/B150$\geq$5.0 means that the B concentration at the depth "x" is 5.0 times or more the B concentration at the depth 150 $\mu$m. The B concentration at the depth 150 $\mu$m may be deemed the B concentration at the center of thickness of the steel sheet. Bx/B150$\geq$5.0 means B is concentrated at the depth "x". The "depth satisfying formula (1) being 0.5 $\mu$m or more from the interface of the steel sheet and plating layer" means formula (1) is satisfied in the range from the interface of the steel sheet and plating layer down to a depth of 0.5 $\mu$m or more in the thickness direction of the steel sheet and means that B is concentrated in the range down to a depth of 0.5 $\mu$m or more in the thickness direction of the steel sheet.

The interface of the steel sheet and the plating layer in the present embodiment is determined as follows: First, the Fe content in the thickness direction of the plated steel sheet is measured by GDS measurement. The highest value of this Fe content is deemed the Fe content of the steel sheet. The point where the Fe content becomes 93% of the Fe content of the steel sheet is defined as the "interface of the steel sheet and plating layer."

By B concentrating at the surface layer of the steel sheet as explained above, B segregates at the Fe grain boundaries of the surface structures. Due to this, it is possible to keep molten zinc from penetrating the Fe grain boundaries at the time of spot welding and suppress occurrence of LME.

(Method of Measurement of GDS)

Bx, B150 are found by GDS. The surface of the steel sheet covered is rendered an Ar atmosphere, voltage is applied to generate plasma, and, in that state, the steel sheet surface is sputtered to analyze elements in the depth direction. The elements included in the material are identified from the emission spectrum wavelengths unique to the elements emitted due to atoms excited in the glow plasma. The emission intensities of the identified elements are estimated.

Data of the depth direction can be estimated from the sputter time. Specifically, it is possible to use standard samples in advance to find the relationship between the sputter time and sputter depth and convert the sputter time to the sputter depth. Therefore, the sputter depth converted from the sputter time can be defined as the depth from the surface of the material. The sputter time is set so that the sputter depth becomes at least higher than 150 $\mu$m.

GDS measurement is performed five times in the sheet thickness direction and the average of the values found is deemed the B concentration. The measurement conditions are as follows: The B concentrations corresponding to x ($\mu$m) depth and 150 $\mu$m depth respectively are Bx, B150.

Apparatus: high frequency glow discharge optical emission spectrometry apparatus (made by LECO Japan Corporation, Model Name "GDS850A"
Ar gas pressure: 0.3 MPa
Anode diameter: 4 mm$\varphi$
RF output: 30W
Measurement time: 200 to 1500 seconds

To obtain the effect of suppression of occurrence of LME, the depth satisfying Bx/B150≥5.0 is 0.5 $\mu$m or more. From the viewpoint of the LME resistance, a larger Bx/B150 is preferable. It may be 1.0 $\mu$m or more, 1.2 $\mu$m or more, 1.4 $\mu$m or more, 1.6 $\mu$m or more, 1.8 $\mu$m or more, or 2.0 $\mu$m or more. Bx/B150 is the ratio of the B concentration at the depth "x" with respect to the B concentration at the depth 150 $\mu$m, therefore the depth satisfying Bx/B150≥5.0 is less than 150 $\mu$m. Even if the depth satisfying Bx/B150≥5.0 is made deeper, the LME resistance will not fall, but the depth satisfying Bx/B150≥5.0 may be 100.0 $\mu$m or less, 50.0 $\mu$m or less, 30.0 $\mu$m or less, 20.0 $\mu$m or less, or 10.0 $\mu$m or less.

In the plated steel sheet of the present embodiment, it is believed that LME is suppressed by the B concentrating at the surface layer of the steel in this way segregating at the Fe grain boundaries and suppressing penetration of Zn. Such a B distribution of the surface layer can be obtained by producing the plated steel sheet by the later explained method of production from molten steel having the above-mentioned chemical composition.

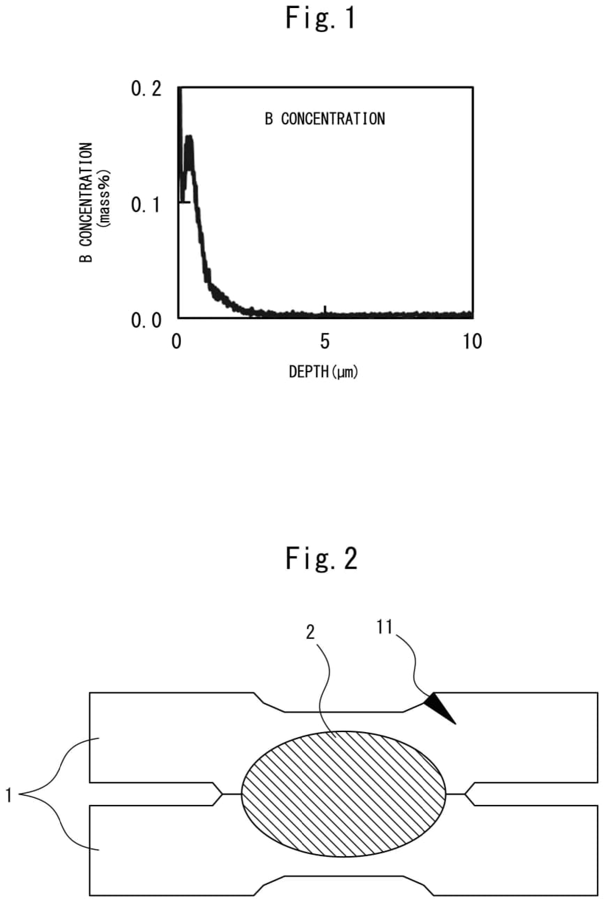

FIG. 1 shows one example of the distribution of B obtained by GDS measurement at the surface layer of the plated steel sheet of the present embodiment. Referring to FIG. 1, it can be confirmed that the B concentration rapidly rises from a position of a depth of about 2 $\mu$m from the surface to the surface (position of depth of 0 $\mu$m).

[Thickness of Oxides]

In the plated steel sheet of the present embodiment, the thickness of the oxides formed at the surface of the plated steel sheet is 0.5 $\mu$m or less. If thick oxides of more than 0.5 $\mu$m are formed at the surface of the plating layer, they become causes of painting defects. Further, the corrosion resistance after painting falls, therefore red rust easily forms. To make the thickness of oxides at the surface of the plating layer 0.5 $\mu$m or less, it is necessary to avoid heat treatment at an atmospheric furnace etc. after the plated steel sheet is produced.

The thickness of the oxides at the surface of the plating layer is measured by examination of the cross-section by SEM. Specifically, locations in which O is contained in 20% or more by EDS are defined as oxides and the thickness of the oxides is measured. The measurement field is made a horizontal 80 $\mu$m×vertical 50 $\mu$m. The oxide thickness of the thickest part in the field is measured. Similar measurement is conducted on five fields. The average of the maximum oxide thicknesses of the fields is made the "surface oxide thickness". The thinner the oxide thickness of the surface of the plating layer, the more preferable. It may be 0.4 $\mu$m or less, 0.3 $\mu$m or less, 0.2 $\mu$m or less, or 0.1 $\mu$m or less.

[Thickness of Internal Oxide Layer]

In the plated steel sheet of the present embodiment, there is an internal oxide layer of a thickness of 1.0 $\mu$m or more present in the thickness direction of the steel sheet from the interface of the steel sheet and plating layer. Due to Si and Mn precipitating as internal oxides, the concentrations of Si and Mn dissolved in the steel sheet surface layer fall. In particular, Si is an element promoting LME and causing the LME resistance to fall, therefore if the concentration of solute Si of the steel sheet surface layer falls due to internal oxidation, the LME resistance is improved. The thickness of the internal oxide layer may be 2.0 $\mu$m or more, 3.0 $\mu$m or more, 4.0 $\mu$m or more, 5.0 $\mu$m or more, 6.0 $\mu$m or more, and 7.0 $\mu$m or more. The thickness of the internal oxide layer may also be 100.0 $\mu$m or less, 50.0 $\mu$m or less, 40.0 $\mu$m or less, 30.0 $\mu$m or less, or 25.0 $\mu$m or less.

The thickness of the internal oxide layer is measured by examination of the cross-section by SEM. Specifically, in the steel sheet surface layer right below the plating layer, precipitates in which O is contained in 20% or more by EDS are defined as internal oxides and the thickness of the internal oxide layer is measured. The size of the measurement field is made a horizontal 80 $\mu$m×vertical 50 $\mu$m. The thickest internal oxide layer thickness in the field is measured. Similar measurement is conducted on five fields. The average of the maximum internal oxide layer thicknesses of the fields is made the" internal oxide layer thickness".

<B Concentration in Range Down to 5.0 $\mu$m Depth>

In the plated steel sheet of the present embodiment, in the above-mentioned GDS measurement, the following formula (2) is preferably satisfied.

$$Bmax/B150 \geq 8 \ldots(2)$$

In the above formula (2), Bmax is the maximum value of the emission intensity of B in the range from the interface of the steel sheet and plating layer down to a depth of 5.0 $\mu$m.

The left side of formula (2) shows the ratio of the maximum value of the emission intensity of B in the range from the interface of the steel sheet and plating layer down to a depth of 5.0 $\mu$m with respect to the B concentration at the depth of 150 $\mu$m. That is, Bmax/B 150≥8 means the B concentration at the position where B is most concentrated in the range from the interface of the steel sheet and plating layer down to a depth of 5.0 $\mu$m is 8 times or more of the B concentration at the depth of 150 $\mu$m. The B concentration at the depth of 150 $\mu$m may be deemed the "B concentration of the steel sheet". Bmax/B150≥8 means that the concentration of B is large from the interface of the steel sheet and plating layer down to 5.0 $\mu$m, that is, in the vicinity of the interface.

Bmax/B150 is preferably large from the viewpoint of the LME resistance. It is preferably 10 or more, more preferably 12 or more, 14 or more, or 16 or more.

Satisfying formula (2) is not essential in the plated steel sheet of the present embodiment. Even if not satisfying formula (2), if satisfying formula (1), an excellent LME resistance can be obtained. By making the B distribution of the surface layer one satisfying formula (2), the B concentrating more greatly at the surface layer of the steel segregates at the Fe grain boundaries and can keep molten zinc from penetrating them, therefore the effect of suppression of LME can be obtained more greatly.

[Sheet Thickness]

The sheet thickness of the plated steel sheet of the present embodiment is not particularly limited. For example, it may be 0.6 to 3.2 mm. The sheet thickness may also be 0.8 mm or more or 1.0 mm or more. The sheet thickness may also be 3.0 mm or less, 2.8 mm or less, 2.6 mm or less, 2.5 mm or less, 2.4 mm or less, 2.2 mm or less, 2.0 mm or less, or 1.8 mm or less.

<<Method of Production of Plated Steel Sheet>>

Next, the method of production of the plated steel sheet of the present embodiment will be explained.

The plated steel sheet according to the present embodiment can be obtained by a method of production comprising a casting step of casting molten steel adjusted in chemical composition to form a steel slab, a hot rolling step of hot rolling the steel slab to obtain a hot rolled steel sheet, a coiling step of coiling up the hot rolled steel sheet, a pickling step of pickling the coiled hot rolled steel sheet, a cold rolling step of cold rolling the pickled hot rolled steel sheet to obtain a cold rolled steel sheet, an annealing step of annealing the cold rolled steel sheet, and a plating step of plating the annealed steel sheet. Alternatively, after the hot rolling step, the hot rolled steel sheet need not be coiled, but may be pickled then cold rolled as it is.

[Casting Step]

The conditions of the casting step are not particularly limited. For example, after smelting by a blast furnace, electric furnace, etc., various types of secondary refining may be performed, then the usual continuous casting, casting by ingot method, or other method may be used for casting.

[Hot Rolling Step]

The steel slab obtained by casting can be hot rolled to obtain a hot rolled steel sheet. The hot rolling step is performed by hot rolling the cast steel slab directly or after cooling once, then reheating it. If reheating, the heating temperature of the steel slab may, for example, be 1100 to 1250°C. In the hot rolling step, usually rough rolling and finish rolling are performed. The temperature and reduction rate of each rolling may be suitably changed in accordance with the desired microstructure or sheet thickness. For example, the end temperature of the finish rolling may be 900 to 1050°C and the reduction rate of the finish rolling may be 10 to 50%.

[Coiling Step]

The hot rolled steel sheet can be coiled at a predetermined temperature. The coiling temperature may be suitably changed in accordance with the desired microstructure etc. For example, it may be 500 to 800°C. Before coiling or after coiling, then uncoiling, the hot rolled steel sheet may be subjected to predetermined heat treatment. Alternatively, the coiling step need not be performed and the hot rolled steel sheet can be pickled after the hot rolling step and the later explained cold rolling performed.

[Pickling Step]

After hot rolling, the steel sheet is pickled. In the method of production of the plated steel sheet of the present embodiment, to make B concentrate at the surface layer of the steel sheet in the later annealing step, the roughness of the steel sheet surface after pickling are controlled. Specifically, the roughness is made an arithmetic average height Ra defined by JIS B0601: 2013 of 1.5 $\mu$m or more. This condition means there is a certain degree of roughness present at the steel sheet surface. If the roughness is small, the strain which is imparted to the surface layer of the steel sheet becomes smaller, therefore concentration of B at the surface layer of the steel sheet no longer proceeds due to the later mentioned annealing at a high dew point.

The greater the roughness Ra, the more preferable. 2.0 $\mu$m or more is preferable, while 2.5 $\mu$m or more, 3.0 $\mu$m or more, or 3.5 $\mu$m or more is more preferable.

The roughness of the steel sheet surface is determined based on JIS B 0601: 2013 by randomly selecting 10 locations at the surface at the surface layer part side and measuring the surface profile at the respective locations by a contact type surface roughness meter. The surface roughnesses at the respective locations are arithmetically averaged to find the "arithmetic average roughness Ra". The roughness of the steel sheet surface after pickling does not have to be constantly measured. Measurement of the roughness may be omitted after the pickling conditions at which the desired roughness are formed are determined.

The roughness of the surface of a steel sheet changes depending on the pickling conditions, therefore it is sufficient to suitably adjust the conditions so that the above roughness is obtained. For example, a 20 to 95°C temperature 1 to 10 mass% hydrochloric acid solution may be used for pickling for a 30 to less than 200 second pickling time.

By the steel sheet surface after pickling being provided with such roughness and by rolling this roughness in the later cold rolling step so as to impart strain to the surface layer of the steel, concentration of B at the surface layer of the steel sheet in the later annealing step is promoted..

[Cold Rolling Step]

After pickling the hot rolled steel sheet, the hot rolled steel sheet can be cold rolled to obtain a cold rolled steel sheet. In the cold rolling step, the roughness imparted in the above pickling step is crushed by rolling to thereby impart strain to the surface layer of the steel sheet. For this reason, the rolls used for the cold rolling are preferably ones having small roughness of the surface. The surface roughness of the rolls is preferably an Ra of 1.0 $\mu$m or less. The surface roughness of the rolls may also be an Ra of 0.8 $\mu$m or less, 0.6 $\mu$m or less, or 0.5 $\mu$m or less. The reduction rate of the cold rolling may be suitably changed in accordance with the desired microstructure or sheet thickness. For example, it may be 20 to 80%. After the cold rolling step, for example, the steel sheet may be air cooled down to room temperature for cooling.

By the roughness of the surface of the hot rolled steel sheet being rolled in the cold rolling step, strain is imparted to the surface layer of the steel sheet. Due to this, concentration of B at the surface layer of the steel sheet is promoted in the subsequent annealing step.

[Annealing Step]

After the cold rolling step, the obtained cold rolled steel sheet is treated by high dew point annealing. In the method of production of the plated steel sheet of the present embodiment, in the annealing step, external oxidation is not allowed to proceed at the surface of the steel sheet, while at the surface layer of the steel sheet, oxidation proceeds toward the inside of the steel sheet as internal oxidation.

In the annealing step of the present embodiment, the steel sheet to which strain has been imparted at the surface layer by the above-mentioned steps is held at a high dew point. In particular, in the annealing step in the method of production of the plated steel sheet of the present embodiment, the dew point is changed between the first half and second half of the rise of temperature up to the holding temperature. Specifically, the dew point in the range from room temperature up to the control temperature and the dew point in the range from the control temperature to the holding temperature are made different. Here, the "control temperature" means the temperature for changing the dew point. The rate of temperature rise up to the holding temperature is not particularly limited. The rate of temperature rise may for example be 1 to 10°C/s. If the rate of temperature rise is less than 1°C/s, it takes too much time for raising the temperature to the control temperature and the oxides on the surface of the plating layer are liable to become thicker. On the other hand, if the rate of temperature rise is more than 10°C/s, internal oxidation will not sufficiently proceed, the strain imparted to the steel sheet surface layer will not be sufficiently released, and the B concentration is liable to become insufficient. From these viewpoints, the rate of temperature rise may be 2°C/s or more, 3°C/s or more, or 4°C/s or more. The rate of temperature rise may also be 9°C/s or less, 8°C/s or less, or 7°C/s or less.

The control temperature is 450 to 550°C. In the range of temperature rise from room temperature to the control temperature, the dew point in the annealing atmosphere is -40°C or more and -20°C or less. In the range from the control temperature to the holding temperature, the dew point of the annealing atmosphere is made more than -20°C and 20°C or less.

If the control temperature is less than 450°C, the dew point rises at a low temperature, therefore internal oxidation proceeds at a low temperature, strain imparted to the steel sheet surface layer is released, and concentration of B is no longer promoted in the range from the control temperature to the holding temperature. If the control temperature is more than 550°C, the strain imparted to the steel sheet surface layer is released before internal oxidation proceeds at a high temperature, therefore concentration of B is no longer promoted.

If the dew point in the range from room temperature to the control temperature is less than - 40°C, Si and Mn will externally oxidize and internal oxidation is liable to no longer proceed in the range from the control temperature to the holding temperature. If the dew point in the range from room temperature to the control temperature is more than -20°C, internal oxidation will proceed at a low temperature, therefore the strain imparted to the surface layer of the steel sheet will be released. As a result, concentration of B is liable to no longer be promoted in the range from the control temperature to the holding temperature.

Similarly, if the dew point in the range from the control temperature to the holding temperature is -20°C or less, the internal oxidation for suppressing the deboronation phenomenon is liable to be unable to proceed sufficiently. If the dew point in the range from the control temperature to the holding temperature is more than 20°C, external oxidation will proceed and the internal oxidation for suppressing the deboronation phenomenon is liable to be unable to proceed sufficiently.

Furthermore, the dew point in the range from the control temperature to the holding temperature is made 10°C or more higher than the dew point in the range when raising the temperature from room temperature to the control temperature. Due to this, it is possible to promote internal oxidation and promote the concentration of B.

From the viewpoint of suitably concentrating B, the control temperature may be 460°C or more, 470°C or more, or 480°C or more. The control temperature may also be 540°C or less, 530°C or less, or 520°C or less. From the viewpoint of suitably causing internal oxidation and concentrating B, the dew point in the range when raising the temperature from room temperature to the control temperature may be -38°C or more, -37°C or more, -35°C or more. The dew point in the range when raising the temperature from room temperature to the control temperature may be 18°C or less, 17°C or less, or 15°C or less. The dew point in the range from the control temperature to the holding temperature may also be -18°C or more, -17°C or more, -15°C or more, The dew point in the range from the control temperature to the holding temperature may also be 18°C or less, 17°C or less, 15°C or less.

The holding temperature is made 760 to 900°C in order for the internal oxidation to proceed and concentration of B to be promoted. Further, the holding time at the holding temperature is made 0 to 360 seconds. The holding temperature may also be 770°C or more, 780°C or more, or 790°C or more. The holding temperature may also be 890°C or less, 880°C or less, or 870°C or less. The holding time may also be 10 seconds or more, 30 seconds or more, 50 seconds or more, or 60 seconds or more. The holding time may also be 330 seconds or less, 300 seconds or less, 270 seconds or less, 240 seconds or less, or 200 seconds or less.

The atmosphere in the annealing is preferably a nonoxidizing atmosphere. For example, it may be $N_2$ -1 to 10vol%$H_2$ , $N_2$ -2 to 4vol%$H_2$ . The oxygen concentration of the atmosphere is preferably 50 ppm or less and may also be 30 ppm or less, 20 ppm or less, or 10 ppm or less. By setting such conditions, it is possible to suppress oxidation of the plating surface while making internal oxidation proceed.

By making the dew point rise at the control temperature or more in the annealing step in the state where strain is imparted to the surface layer of the steel sheet by the above-mentioned method, internal oxidation rapidly proceeds at the surface layer of the steel sheet and B is taken into the oxides formed inside of the steel sheet whereby B concentrates at the surface layer of the steel sheet, B segregates at the Fe grain boundaries, and the above-mentioned distribution of concentration of B at the surface layer is obtained.

The annealing is performed in the state where a 1 to 20 MPa tension is applied. If tension is applied at the time of annealing, strain is introduced into the steel sheet more greatly and the B concentration at the surface layer is promoted.

[Plating Step]

The plated steel sheet according to an embodiment can be obtained by plating forming a plating layer on a steel sheet produced as explained above.

The plating may be performed in accordance with a method known to persons skilled in the art. The plating, for example, may be performed by hot dip coating or may be performed by electroplating, vapor deposition plating, flame spraying, and cold spraying. Preferably the plating is performed by hot dip coating. The conditions of the plating may be suitably set considering the chemical composition, thickness, amount of deposition, etc. of the desired plating layer.

The plated steel sheet according to the present embodiment is high strength and has a high LME resistance, therefore can be suitably used in a broad range of fields such as automobiles, household electrical appliance products, and building materials. In particular, use in the automobile field is preferable. A plated steel sheet used in automobiles is often spot welded. In that case, LME cracking can become a remarkable problem. For this reason, if using the plated steel sheet according to the present embodiment as the steel sheet for automobiles, the effect of the present embodiment of having a high LME resistance is suitably manifested.

EXAMPLES

Below, examples will be used to explain the present invention in more detail. The present invention is not limited to these examples.

<Example No. 1>

Molten steel was smelted in a blast furnace and cast by continuous casting to obtain a steel slab having a chemical composition described in No. 1 of Table 1. The obtained steel slab was heated to 1200°C and hot rolled by an end temperature of finish rolling of 950°C and reduction rate of finish rolling of 30% to obtain a hot rolled steel sheet. The obtained hot rolled steel sheet was coiled up by a coiling temperature of 650°C.

After coiling, the steel sheet was pickled for 40 seconds using a 40°C 5 mass% hydrochloric acid solution. After pickling, it was cold rolled by a reduction rate of 50% to obtain a cold rolled steel sheet. The thickness of the cold rolled steel sheet was 1.6 mm.

After that, the steel sheet was annealed by a holding temperature of 800°C and holding time of 0 second in an oxygen concentration 20 ppm or less furnace in a $N_2$-4vol%$H_2$ gas atmosphere to prepare a steel sheet sample. The rate of temperature rise at the time of annealing was 5.0°C/s. The dew point of the annealing atmosphere was -20°C from room temperature to the control temperature, the control temperature being 500°C, and -10°C from the control temperature to the holding temperature. Further, the annealing was performed while applying 15 MPa tension. Note that, a holding time of 0 second means immediately starting to lower the temperature after raising the temperature to 800°C.

Further, the annealed steel sheet was dipped in a 450°C hot dip galvanization bath (Zn-0.2%Al) for 3 seconds, then was pulled out by a 100 mm/s. The amount of plating deposition was controlled to 50 g/m$^2$ by $N_2$ wiping gas to obtain a plated steel sheet provided with a plating layer at both surfaces.

<Example Nos. 2 to 23 and Comparative Example Nos. 24 to 34>

Except for making the chemical composition the one described in Table 1 and making the annealing conditions and plating conditions the ones described in Table 2, a plated steel sheet was prepared under conditions similar to Example 1. Note that in the plating type in Table 2, "a" means Zn-0.2%Al, "b" means Zn-1.5%Al-1.5%Mn, and "c" means Zn-22%Al-8%Mg. In No. 34, after plating, the sheet was heat treated in an atmospheric furnace at 900°C for 10 seconds.

(Roughness After Pickling)

When producing plated steel sheet, the hot rolled steel sheet after pickling was measured for roughness of the surface. The roughness of the surface was measured based on JIS B 0601: 2013 by randomly selecting 10 locations at the surface of the surface layer part side, measuring the surface profile at each of the locations by a contact type surface roughness meter, and arithmetically averaging the surface roughnesses at these locations to find the "arithmetic average roughness Ra". The roughness of the surface of the hot rolled steel sheet are shown in Table 2.

[Table 1]

Table 1

| No. | Class | Chemical composition (mass%), balance: Fe and impurities | | | | | | | | | | |
|---|---|---|---|---|---|---|---|---|---|---|---|---|
| | | C | Si | Mn | sol. Al | P | S | N | B | Ti | Nb | Others |
| 1 | Ex. | 0.05 | 0.7 | 2.0 | 0.0 | 0.0001 | 0.0006 | 0.0003 | 0.0009 | 0.0021 | 0.0002 | |
| 2 | Ex. | 0.10 | 0.7 | 2.0 | 0.0 | 0.0080 | 0.0005 | 0.0003 | 0.0009 | 0.0021 | 0.0002 | Hf: 0.01 |
| 3 | Ex. | 0.10 | 1.0 | 2.0 | 0.5 | 0.0080 | 0.0007 | 0.0002 | 0.0007 | 0.0200 | 0.0007 | |
| 4 | Ex. | 0.10 | 1.0 | 2.0 | 1.0 | 0.0070 | 0.0003 | 0.0007 | 0.0005 | 0.0109 | 0.0001 | |
| 5 | Ex. | 0.10 | 1.0 | 2.2 | 0.5 | 0.0020 | 0.0007 | 0.0002 | 0.0005 | 0.0202 | 0.0009 | |
| 6 | Ex. | 0.20 | 1.0 | 2.0 | 0.5 | 0.0100 | 0.0004 | 0.0001 | 0.0005 | 0.0201 | 0.0003 | Mg: 0.001 |
| 7 | Ex. | 0.20 | 1.0 | 2.0 | 0.7 | 0.0020 | 0.0001 | 0.0009 | 0.0007 | 0.0010 | 0.0007 | Zr: 0.015 |
| 8 | Ex. | 0.20 | 1.0 | 2.2 | 0.8 | 0.0008 | 0.0004 | 0.0006 | 0.0020 | 0.0180 | 0.0000 | |
| 9 | Ex. | 0.20 | 1.0 | 2.5 | 0.7 | 0.0017 | 0.0006 | 0.0003 | 0.0020 | 0.0190 | 0.0006 | Cr: 0.10 |
| 10 | Ex. | 0.20 | 1.0 | 2.3 | 1.0 | 0.0011 | 0.0009 | 0.0004 | 0.0008 | 0.0174 | 0.0008 | Cu: 0.10 |
| 11 | Ex. | 0.20 | 1.0 | 2.3 | 0.5 | 0.0031 | 0.0007 | 0.0005 | 0.0009 | 0.0184 | 0.0007 | |
| 12 | Ex. | 0.20 | 1.0 | 2.2 | 1.0 | 0.0065 | 0.0010 | 0.0002 | 0.0020 | 0.0210 | 0.0007 | Ni: 0.08 |
| 13 | Ex. | 0.25 | 1.0 | 2.2 | 0.5 | 0.0012 | 0.0002 | 0.0002 | 0.0008 | 0.0212 | 0.0009 | |
| 14 | Ex. | 0.25 | 1.0 | 2.2 | 0.5 | 0.0012 | 0.0002 | 0.0002 | 0.0008 | 0.0211 | 0.0009 | |
| 15 | Ex. | 0.25 | 1.0 | 2.2 | 1.0 | 0.0040 | 0.0005 | 0.0003 | 0.0008 | 0.0210 | 0.0005 | V: 0.09 |
| 16 | Ex. | 0.30 | 1.0 | 5.0 | 1.0 | 0.0099 | 0.0002 | 0.0005 | 0.0008 | 0.0200 | 0.0007 | |
| 17 | Ex. | 0.30 | 3.0 | 0.3 | 0.0 | 0.0110 | 0.0007 | 0.0009 | 0.0019 | 0.0190 | 0.0002 | |
| 18 | Ex. | 0.35 | 1.0 | 3.0 | 1.5 | 0.0092 | 0.0003 | 0.0007 | 0.0010 | 0.0200 | 0.0002 | Mo: 0.09 |
| 19 | Ex. | 0.35 | 1.0 | 2.2 | 1.0 | 0.0091 | 0.0002 | 0.0005 | 0.0006 | 0.0220 | 0.0010 | REM: 0.008 |
| 20 | Ex. | 0.40 | 0.7 | 2.2 | 2.0 | 0.0045 | 0.0004 | 0.0007 | 0.0008 | 0.0220 | 0.0002 | |
| 21 | Ex. | 0.40 | 1.0 | 2.2 | 1.0 | 0.0035 | 0.0004 | 0.0005 | 0.0007 | 0.0220 | 0.0001 | W: 0.05 |
| 22 | Ex. | 0.40 | 1.0 | 2.2 | 1.0 | 0.0082 | 0.0005 | 0.0008 | 0.0020 | 0.0220 | 0.0003 | |
| 23 | Ex. | 0.40 | 1.0 | 2.2 | 1.0 | 0.0080 | 0.0005 | 0.0002 | 0.0018 | 0.0220 | 0.0005 | Ca: 0.0100 |
| 24 | Comp. ex. | 0.20 | 0.5 | 2.0 | 0.0 | 0.0100 | 0.0008 | 0.0007 | 0.0008 | 0.0012 | 0.0005 | |
| 25 | Comp. ex. | 0.20 | 3.1 | 2.0 | 0.0 | 0.0100 | 0.0007 | 0.0004 | 0.0007 | 0.0020 | 0.0005 | |
| 26 | Comp. ex. | 0.20 | 1.0 | 2.0 | 0.0 | 0.0100 | 0.0005 | 0.0003 | 0.0006 | 0.0014 | 0.0005 | |
| 27 | Comp. ex. | 0.20 | 1.0 | 2.0 | 0.0 | 0.0100 | 0.0008 | 0.0004 | 0.0005 | 0.0019 | 0.0005 | |

(continued)

| No. | Class | Chemical composition (mass%), balance: Fe and impurities | | | | | | | | | | |
|---|---|---|---|---|---|---|---|---|---|---|---|---|
| | | C | Si | Mn | sol. Al | P | S | N | B | Ti | Nb | Others |
| 28 | Comp. ex. | 0.20 | 1.0 | 2.0 | 0.0 | 0.0100 | 0.0005 | 0.0003 | 0.0006 | 0.0015 | 0.0005 | |
| 29 | Comp. ex. | 0.20 | 1.0 | 2.0 | 0.0 | 0.0100 | 0.0008 | 0.0004 | 0.0005 | 0.0010 | 0.0005 | |
| 30 | Comp. ex. | 0.20 | 1.0 | 2.0 | 0.0 | 0.0100 | 0.0008 | 0.0004 | 0.0005 | 0.0012 | 0.0005 | |
| 31 | Comp. ex. | 0.20 | 1.0 | 2.0 | 0.0 | 0.0100 | 0.0008 | 0.0004 | 0.0005 | 0.0019 | 0.0005 | |
| 32 | Comp. ex. | 0.20 | 1.0 | 2.0 | 0.0 | 0.0100 | 0.0007 | 0.0003 | 0.0006 | 0.0022 | 0.0005 | |
| 33 | Comp. ex. | 0.20 | 1.0 | 2.0 | 0.0 | 0.0100 | 0.0010 | 0.0001 | 0.0008 | 0.0012 | 0.0005 | |
| 34 | Comp. ex. | 0.20 | 1.0 | 2.0 | 0.0 | 0.0098 | 0.0004 | 0.0005 | 0.0007 | 0.0011 | 0.0006 | |

* Underlines indicate outside scope of present invention.

[Table 2]

Table 2

| No. | Class | Roughness after pickling Ra (μm) | Annealing conditions | | | | | Plating type | Heating in atmospheric furnace after plating |
|---|---|---|---|---|---|---|---|---|---|
| | | | Control temp. (°C) | Dew point of room temp. to control temp. (°C) | Dew point of control temp. to holding temp. (°C) | Holding temp. (°C) | Holding time (s) | | |
| 1 | Ex. | 1.5 | 500 | -20 | -10 | 800 | 0 | a | No |
| 2 | Ex. | 2.5 | 500 | -40 | -19 | 800 | 30 | a | No |
| 3 | Ex. | 1.5 | 450 | -20 | -10 | 800 | 20 | a | No |
| 4 | Ex. | 1.5 | 500 | -20 | 0 | 820 | 30 | b | No |
| 5 | Ex. | 2.5 | 500 | -20 | 0 | 840 | 30 | b | No |
| 6 | Ex. | 1.7 | 550 | -20 | 0 | 860 | 40 | b | No |
| 7 | Ex. | 2.6 | 500 | -20 | 0 | 860 | 100 | b | No |
| 8 | Ex. | 2.6 | 500 | -20 | 0 | 860 | 100 | b | No |
| 9 | Ex. | 2.9 | 500 | -20 | 0 | 860 | 100 | b | No |
| 10 | Ex. | 3.5 | 500 | -20 | 0 | 860 | 100 | c | No |
| 11 | Ex. | 3.2 | 500 | -20 | 0 | 860 | 100 | b | No |
| 12 | Ex. | 2.5 | 500 | -20 | 0 | 860 | 100 | b | No |
| 13 | Ex. | 2.4 | 500 | -20 | 0 | 860 | 100 | b | No |

(continued)

| No. | Class | Roughness after pickling Ra (μm) | Annealing conditions | | | | | Plating type | Heating in atmospheric furnace after plating |
| --- | --- | --- | --- | --- | --- | --- | --- | --- | --- |
| | | | Control temp. (°C) | Dew point of room temp. to control temp. (°C) | Dew point of control temp. to holding temp. (°C) | Holding temp. (°C) | Holding time (s) | | |
| 14 | Ex. | 1.5 | 500 | -20 | -10 | 800 | 0 | c | No |
| 15 | Ex. | 3.5 | 500 | -20 | 0 | 860 | 100 | b | No |
| 16 | Ex. | 3.2 | 500 | -20 | 0 | 860 | 100 | b | No |
| 17 | Ex. | 3.0 | 500 | -20 | 0 | 860 | 100 | b | No |
| 18 | Ex. | 3.8 | 500 | -20 | 0 | 860 | 360 | c | No |
| 19 | Ex. | 2.9 | 500 | -20 | 0 | 860 | 100 | c | No |
| 20 | Ex. | 2.6 | 500 | -20 | 0 | 860 | 100 | c | No |
| 21 | Ex. | 2.5 | 500 | -20 | 0 | 900 | 100 | c | No |
| 22 | Ex. | 3.1 | 500 | -20 | 0 | 860 | 100 | b | No |
| 23 | Ex. | 2.7 | 500 | -20 | 0 | 860 | 100 | b | No |
| 24 | Comp. ex. | 1.5 | 500 | -30 | -10 | 800 | 30 | a | No |
| 25 | Comp. ex. | 1.5 | 500 | -30 | -10 | 800 | 30 | a | No |
| 26 | Comp. ex. | 1.5 | 500 | <u>-60</u> | -10 | 800 | 30 | a | No |
| 27 | Comp. ex. | 1.5 | 500 | <u>0</u> | 0 | 800 | 30 | a | No |
| 28 | Comp. ex. | 1.5 | 500 | -30 | <u>-25</u> | 800 | 30 | a | No |
| 29 | Comp. ex. | 1.5 | 500 | -30 | <u>22</u> | 800 | 30 | a | No |
| 30 | Comp. ex. | 1.5 | <u>430</u> | -30 | -10 | 800 | 30 | a | No |
| 31 | Comp. ex. | 1.5 | <u>570</u> | -30 | -10 | 800 | 30 | a | No |
| 32 | Comp. ex. | 1.5 | 500 | -30 | -10 | <u>710</u> | 30 | a | No |
| 33 | Comp. ex. | <u>1.2</u> | 500 | -30 | -10 | 800 | 30 | a | <u>No</u> |
| 34 | Comp. ex. | 1.5 | 500 | -30 | -10 | 800 | 30 | c | <u>900°C×10s</u> |
| * Underlines indicate outside scope of production conditions of present invention. | | | | | | | | | |

<<Results of Evaluation>>

The obtained steel sheet was evaluated as follows:

(B Distribution at Steel Surface Layer)

The B distribution at the steel surface layer of the plated steel sheet was evaluated as follows:

A sample cut to 50 mm×50 mm size from each plated steel sheet was used for GDS. The GDS was measured five times in the sheet thickness direction. The average value of these was made the B concentration. The measurement conditions were as follows: The B concentrations corresponding to the x (μm) depth and 150 μm depth are designated as Bx and B150.

Apparatus: high frequency glow discharge optical emission spectrometry apparatus (made by LECO Japan Corporation, Model Name "GDS850A"
Ar gas pressure: 0.3 MPa
Anode diameter: 4 mmφ
RF output: 30W
Measurement time: 200 to 1500 seconds

From the Bx found, the depth satisfying the formula (1): Bx/B150≥5.0 and the value of the left side of formula (2): Bmax/B150 were found.

(Thickness of Surface Oxide Layer)

Using examination of the cross-section by an SEM, a location containing 20% or more of O by EDS was defined as an oxide. The thickness of the oxides was measured. The measurement field was made a horizontal 80 μm×vertical 50 μm. The greatest thickness of the oxides in the field was measured. Similar measurement was performed at five fields. The average of the maximum oxide thicknesses of the different fields was deemed the surface oxide layer thickness. These are shown in Table 3, The "<0.5" in Table 3 shows the oxide thickness was less than 0.5 μm.

(Thickness of Internal Oxide Layer)

Using examination of the cross-section by an SEM, precipitates containing 20% or more of O by EDS in the surface layer of the steel sheet right under the plating layer were defined as internal oxides. The thickness of the oxide layer was measured. The size of the measurement field was made a horizontal 80 μm×vertical 50 μm. The greatest thickness of the internal oxide layer in the field was measured. Similar measurement was performed at five fields. The average of the maximum internal oxide layer thicknesses of the different fields was deemed the internal oxide layer thickness. These are shown in Table 3.

(Tensile Strength)

For each plated steel sheet, a JIS No. 5 tensile test piece having a direction perpendicular to the rolling direction as a longitudinal direction was taken and subjected to a tensile test based on JIS Z 2241: 2011 to find the tensile strength. This was evaluated in the following way: In the present embodiment, if evaluated as A or more, the sample was judged excellent in LME resistance.

Evaluation AAA: 1180 MPa or more
Evaluation AA: 980 MPa or more and less than 1180 MPa
Evaluation A: 780 MPa or more and less than 980 MPa
Evaluation B: less than 780 MPa

(LME Resistance)

Two samples cut to 50 mm×100 mm size were cut from each plated steel sheet. These two samples were spot welded using dome radius type 8 mm welding electrodes by a weld angle of 5°, a squeezing force of 5.0 kN, a weld time of 1.2 seconds, and a weld current of 12 kA to produce a welded joint.

Referring to FIG. 2, the method of evaluation of the LME resistance will be explained. The LME resistance was evaluated by overlaying two steel sheets 1 and spot welding them, then determining the length of an LME crack (cracking of shoulder part 11) formed at the shoulder part of the welded part 2 formed. The "shoulder part" means the slanted part of the depressed recess formed by spot welding. The length of the cracking of shoulder part 11 was used for evaluation as shown below. In the examples, if evaluated as A or more, the sample was judged excellent in LME resistance.
    Evaluation AAA: 0 μm
    Evaluation AA: more than 0 μm and less than 50 μm
    Evaluation A: 50 μm or more and less than 160 μm
    Evaluation B: 160 μm or more

(Evaluation of Red Rust Resistance)

As evaluation of the corrosion resistance of the plated steel sheet, the red rust resistance was evaluated. From each plated steel sheet, a sample cut to 75 mm×100 mm size was taken. The end faces and back surface of the sample were protected by being sealed by tape. After that, the sample was cross cut down to the plating layer and subjected to a salt spray test of 5% Nal held at 35°C based on JIS Z 2371: 2015. The test was conducted until 2000 hours. After the test, the time until occurrence of red rust was found. The sample was evaluated as follows in accordance with the time until occurrence of red rust. In the examples, if evaluated as A or more, the sample was judged excellent in red rust resistance.
    Evaluation AAA: time for occurrence of red rust 2000 hours or more
    Evaluation AA: time for occurrence of red rust 1000 hours or more and less than 2000 hours
    Evaluation A: time for occurrence of red rust 240 hours or more and less than 1000 hours
    Evaluation B: time for occurrence of red rust less than 240 hours

The results of evaluation are shown in Table 3.

[Table 3]

Table 3

| No. | Class | Depth satisfying formula (1) (μm) | Left side of formula (2) | Surface oxide thickness (μm) | Internal oxide layer thickness (μm) | Tensile strength | LME resistance | Red rust resistance |
|---|---|---|---|---|---|---|---|---|
| 1 | Ex. | 0.5 | 3 | <0.5 | 1.0 | A | A | A |
| 2 | Ex. | 1.6 | 2 | <0.5 | 2.2 | AA | AA | A |
| 3 | Ex. | 1.2 | 4 | <0.5 | 2.0 | A | A | A |
| 4 | Ex. | 1.5 | 5 | <0.5 | 3.3 | AA | AA | AA |
| 5 | Ex. | 1.8 | 6 | <0.5 | 1.8 | AA | AAA | AA |
| 6 | Ex. | 1.9 | 8 | <0.5 | 4.2 | AA | AAA | AA |
| 7 | Ex. | 2.2 | 10 | <0.5 | 4.5 | AA | AAA | AA |
| 8 | Ex. | 2.3 | 12 | <0.5 | 5.5 | AA | AAA | AA |
| 9 | Ex. | 2.4 | 12 | <0.5 | 4.6 | AA | AAA | AA |
| 10 | Ex. | 2.6 | 11 | <0.5 | 5.2 | AA | AAA | AAA |
| 11 | Ex. | 3.5 | 12 | <0.5 | 6.3 | AA | AAA | AA |
| 12 | Ex. | 2.4 | 12 | <0.5 | 5.7 | AA | AAA | AA |
| 13 | Ex. | 2.2 | 11 | <0.5 | 6.3 | AAA | AAA | AA |
| 14 | Ex. | 0.5 | 3 | <0.5 | 2.0 | A | AAA | AAA |
| 15 | Ex. | 3.1 | 11 | <0.5 | 6.0 | AAA | AAA | AA |

(continued)

| No. | Class | Steel surface layer B distribution | | Surface oxide thickness ($\mu$m) | Internal oxide layer thickness ($\mu$m) | Performance | | |
|---|---|---|---|---|---|---|---|---|
| | | Depth satisfying formula (1) ($\mu$m) | Left side of formula (2) | | | Tensile strength | LME resistance | Red rust resistance |
| 16 | Ex. | 3.0 | 12 | <0.5 | 7.1 | AAA | AAA | AA |
| 17 | Ex. | 3.0 | 11 | <0.5 | 6.3 | AA | AAA | AA |
| 18 | Ex. | 6.3 | 20 | <0.5 | 21.8 | AAA | AAA | AAA |
| 19 | Ex. | 2.5 | 15 | <0.5 | 5.8 | AAA | AAA | AAA |
| 20 | Ex. | 2.3 | 12 | <0.5 | 7.1 | AAA | AAA | AAA |
| 21 | Ex. | 3.4 | 18 | <0.5 | 7.8 | AAA | AAA | AAA |
| 22 | Ex. | 3.2 | 12 | <0.5 | 7.7 | AAA | AAA | AA |
| 23 | Ex. | 2.8 | 15 | <0.5 | 7.9 | AAA | AAA | AA |
| 24 | Comp. ex. | <u>0.0</u> | 0 | <0.5 | <u>0.8</u> | AA | <u>B</u> | A |
| 25 | Comp. ex. | 0.6 | 2 | <0.5 | 2.7 | AA | <u>B</u> | A |
| 26 | Comp. ex. | <u>0.0</u> | 0 | <0.5 | <u>0.7</u> | AA | <u>B</u> | - |
| 27 | Comp. ex. | <u>0.3</u> | 1 | <0.5 | 3.1 | AA | <u>B</u> | A |
| 28 | Comp. ex. | <u>0.3</u> | 1 | <0.5 | <u>0.6</u> | AA | <u>B</u> | A |
| 29 | Comp. ex. | <u>0.2</u> | 1 | <0.5 | <u>0.2</u> | AA | <u>B</u> | A |
| 30 | Comp. ex. | <u>0.2</u> | 1 | <0.5 | 2.5 | AA | <u>B</u> | A |
| 31 | Comp. ex. | <u>0.4</u> | 1 | <0.5 | 3.0 | AA | <u>B</u> | A |
| 32 | Comp. ex. | <u>0.2</u> | 1 | <0.5 | <u>0.3</u> | AA | <u>B</u> | A |
| 33 | Comp. ex. | <u>0.4</u> | 2 | <0.5 | 3.0 | AA | <u>B</u> | A |
| 34 | Comp. ex. | 0.5 | 2 | 3 | 3.0 | AA | A | <u>B</u> |

* Underlines indicate outside scope of present invention or desired properties not obtained.

Nos. 1 to 23 are invention examples. They could be confirmed to have excellent LME resistance and red rust resistance.

In No. 24, the content of Si was low, internal oxidation could not be sufficiently caused, and the deboronation phenomenon could not be inhibited. Therefore, the internal oxide layer became thin, B did not concentrate at the surface layer of the steel sheet, and Bx/B150≥5.0 was not satisfied. As a result, while the steel sheet was excellent in red rust resistance, the LME resistance was inferior.

In No. 25, the content of Si was high. Therefore, while B concentrated at the surface layer, the effect of lowering the LME resistance became greater due to the Si. As a result, while the steel sheet was excellent in red rust resistance, the LME resistance was inferior.

In No. 26, the dew point in the first half of temperature rise in the annealing step was low, Si and Mn externally oxidized, and internal oxidation could not occur in the second half of temperature rise. Therefore, the internal oxide layer became thin, B did not concentrate at the surface layer of the steel sheet, and Bx/B150≥5.0 was not satisfied. As a result, the LME resistance was inferior. Further, non-plating defects occurred. Due to the occurrence of non-plating defects, the red rust resistance could not be evaluated.

In No. 27, the dew point in the first half of temperature rise in the annealing step was high, internal oxidation proceeded at a low temperature, the strain imparted to the surface layer of the steel sheet was released, and concentration of B was not promoted in the second half of temperature rise. Therefore, B did not concentrate at the surface layer of the steel sheet, and Bx/B150≥5.0 was not satisfied. As a result, while the steel sheet was excellent in red rust resistance, the LME resistance was inferior.

In No. 28, the dew point in the second half of temperature rise in the annealing step was low and sufficient internal oxidation for suppressing the deboronation phenomenon did not occur. Therefore, the internal oxide layer became thin, B did not concentrate at the surface layer of the steel sheet, and Bx/B150≥5.0 was not satisfied. As a result, while the steel sheet was excellent in red rust resistance, the LME resistance was inferior.

In No. 29, the dew point in the second half of temperature rise in the annealing step was high and external oxidation proceeded, therefore sufficient internal oxidation for suppressing the deboronation phenomenon did not occur. Therefore, the internal oxide layer became thin, B did not concentrate at the surface layer of the steel sheet, and Bx/B150≥5.0 was not satisfied. As a result, while the steel sheet was excellent in red rust resistance, the LME resistance was inferior.

In No. 30, the control temperature in the annealing step was low, the dew point rose at a low temperature, therefore internal oxidation proceeded at a low temperature, the strain imparted to the surface layer of the steel sheet was released, and concentration of B was not promoted in the second half of temperature rise. Therefore, B did not concentrate at the surface layer of the steel sheet, and Bx/B150≥5.0 was not satisfied. As a result, while the steel sheet was excellent in red rust resistance, the LME resistance was inferior.

In No. 31, the control temperature in the annealing step was high, the strain imparted to the surface layer of the steel sheet was released before internal oxidation proceeded at a high temperature, and concentration of B was not promoted. Therefore, B did not concentrate at the surface layer of the steel sheet, and Bx/B150≥5.0 was not satisfied. As a result, while the steel sheet was excellent in red rust resistance, the LME resistance was inferior.

In No. 32, the holding temperature in the annealing step was low and internal oxidation did not proceed. Therefore, the internal oxide layer became thin, B did not concentrate at the surface layer of the steel sheet, and Bx/B150≥5.0 was not satisfied.. As a result, while the steel sheet was excellent in red rust resistance, the LME resistance was inferior.

In No. 33, after pickling, the roughness on the steel sheet surface was small. Therefore, sufficient strain was not given to the surface layer. Even by high dew point annealing, B did not concentrate at the surface layer of the steel sheet and Bx/B150≥5.0 was not satisfied. As a result, while the steel sheet was excellent in red rust resistance, the LME resistance was inferior.

In No. 34, after plating, the steel sheet was heat treated in an atmospheric furnace at 900°C for 10 seconds, therefore thick oxides formed on the surface of the plating and the red rust resistance fell.

[INDUSTRIAL APPLICABILITY]

According to the present invention, it becomes possible to provide a plated steel sheet having a high LME resistance and red rust resistance. The plated steel sheet can be suitably used for automobiles, home electrical appliance products, building materials, and other applications, in particular for automobiles. Therefore, the present invention is an invention with extremely high applicability in industry.

REFERENCE SIGNS LIST

1 steel sheet
2 welded part
11 cracking of shoulder part

**Claims**

1. A plated steel sheet comprising

   a steel sheet and
   a plating layer provided on one surface or both surfaces of the steel sheet,
   wherein
   a tensile strength is 780 MPa or more,
   a chemical composition of the steel sheet comprises, by mass%,
   C: 0.05 to 0.40%,
   Si: 0.7 to 3.0%,
   Mn: 0.1 to 5.0%,
   sol. Al: 0 to 2.0%,
   P: 0.0300% or less,

S: 0.0300% or less,
N: 0.0100% or less,
B: 0.0005 to 0.0050%,
Ti: 0.0010 to 0.1000%,
Nb: 0 to 0.2000%,
V: 0 to 0.15%,
Cr: 0 to 2.00%,
Ni: 0 to 2.00%,
Cu: 0 to 2.00%,
Mo: 0 to 1.00%,
W: 0 to 1.00%,
Ca: 0 to 0.1000%,
Mg: 0 to 0.100%,
Zr: 0 to 0.100%,
Hf: 0 to 0.100%,
REM: 0 to 0.100% and
a balance of Fe and impurities,
the plating layer comprises Zn,
a depth where an emission intensity Bx at a depth x ($\mu$m) and an emission intensity B150 at a depth of 150 $\mu$m measured by GDS measurement in a thickness direction of the plated steel sheet satisfy

$$Bx/B150 \geq 5.0 \ldots(1)$$

is 0.5 $\mu$m or more from an interface of the steel sheet and the plating layer,
a thickness of oxides formed on the surface of the plating layer is 0.5 $\mu$m or less, and
there is an internal oxide layer of a thickness of 1.0 $\mu$m or more in a thickness direction of the steel steel from the interface.

2. The plated steel sheet according to claim 1, wherein a depth where the emission intensity Bx and the emission intensity B150 satisfy Bx/B150$\geq$5.0 is 2.0 $\mu$m or more from an interface of the steel sheet and the plating layer.

3. The plated steel sheet according to claim 1, wherein, a maximum value Bmax of emission intensity of B in a range from an interface of the steel sheet and the plating layer down to a depth of 5.0 $\mu$m measured by GDS measurement in a thickness direction of the plated steel sheet satisfies

$$Bmax/B150 \geq 8 \ldots(2)$$

4. The plated steel sheet according to any one of claims 1 to 3, wherein the plating layer contains, by mass%, Fe: 0 to 3.0%, Al: 0 to 30.0%, and Mg: 0 to 10.0% and has a balance of Zn and impurities.

5. The plated steel sheet according to claim 4, wherein the plating layer contains, by mass%, Al: 10.0 to 30.0% and Mg: 4.5 to 10.0%.

## Fig. 1

## Fig. 2

## INTERNATIONAL SEARCH REPORT

<table>
<tr><td>International application No.<br><br>**PCT/JP2024/016974**</td></tr>
</table>

**A. CLASSIFICATION OF SUBJECT MATTER**

*C22C 38/00*(2006.01)i; *C21D 9/46*(2006.01)i; *C22C 18/00*(2006.01)i; *C22C 18/04*(2006.01)i; *C22C 38/58*(2006.01)i; *C23C 2/02*(2006.01)i; *C23C 2/06*(2006.01)i; *C23C 2/40*(2006.01)i; *B23K 11/16*(2006.01)n
FI: C22C38/00 301T; C22C38/58; C21D9/46 J; C23C2/02; C23C2/06; C23C2/40; C22C18/00; C22C18/04; B23K11/16 311

According to International Patent Classification (IPC) or to both national classification and IPC

**B. FIELDS SEARCHED**

Minimum documentation searched (classification system followed by classification symbols)

C22C38/00-38/60; C21D9/46-9/48; C23C2/00-2/40; C22C18/00-18/04; B23K11/16

Documentation searched other than minimum documentation to the extent that such documents are included in the fields searched

Published examined utility model applications of Japan 1922-1996
Published unexamined utility model applications of Japan 1971-2024
Registered utility model specifications of Japan 1996-2024
Published registered utility model applications of Japan 1994-2024

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| A | JP 2019-504196 A (POSCO) 14 February 2019 (2019-02-14)<br>claims, paragraphs [0023]-[0024], [0044] | 1-5 |
| A | JP 2011-231346 A (NISSHIN STEEL CO., LTD.) 17 November 2011 (2011-11-17)<br>claims, paragraphs [0001]-[0008] | 1-5 |
| A | WO 2014/157155 A1 (NISSHIN STEEL CO., LTD.) 02 October 2014 (2014-10-02)<br>claims, paragraphs [0006]-[0011] | 1-5 |
| A | WO 2023/132350 A1 (NIPPON STEEL CORPORATION) 13 July 2023 (2023-07-13)<br>claims | 1-5 |
| P, A | WO 2024/053669 A1 (NIPPON STEEL CORPORATION) 14 March 2024 (2024-03-14)<br>claims | 1-5 |

☐ Further documents are listed in the continuation of Box C.    ☑ See patent family annex.

| | |
|---|---|
| * Special categories of cited documents:<br>"A" document defining the general state of the art which is not considered to be of particular relevance<br>"D" document cited by the applicant in the international application<br>"E" earlier application or patent but published on or after the international filing date<br>"L" document which may throw doubts on priority claim(s) or which is cited to establish the publication date of another citation or other special reason (as specified)<br>"O" document referring to an oral disclosure, use, exhibition or other means<br>"P" document published prior to the international filing date but later than the priority date claimed | "T" later document published after the international filing date or priority date and not in conflict with the application but cited to understand the principle or theory underlying the invention<br>"X" document of particular relevance; the claimed invention cannot be considered novel or cannot be considered to involve an inventive step when the document is taken alone<br>"Y" document of particular relevance; the claimed invention cannot be considered to involve an inventive step when the document is combined with one or more other such documents, such combination being obvious to a person skilled in the art<br>"&" document member of the same patent family |

| Date of the actual completion of the international search | Date of mailing of the international search report |
|---|---|
| **11 July 2024** | **23 July 2024** |

| Name and mailing address of the ISA/JP | Authorized officer |
|---|---|
| **Japan Patent Office (ISA/JP)**<br>**3-4-3 Kasumigaseki, Chiyoda-ku, Tokyo 100-8915**<br>**Japan** | |
| | Telephone No. |

Form PCT/ISA/210 (second sheet) (July 2022)

**INTERNATIONAL SEARCH REPORT**
Information on patent family members

International application No.

**PCT/JP2024/016974**

| Patent document cited in search report | | | Publication date (day/month/year) | Patent family member(s) | | | Publication date (day/month/year) |
|---|---|---|---|---|---|---|---|
| JP | 2019-504196 | A | 14 February 2019 | EP | 3392363 | A1 | |
| | | | | claims, paragraphs [0022]-[0023], [0043] | | | |
| | | | | US | 2018/0371570 | A1 | |
| | | | | WO | 2017/105064 | A1 | |
| | | | | CN | 108431273 | A | |
| JP | 2011-231346 | A | 17 November 2011 | (Family: none) | | | |
| WO | 2014/157155 | A1 | 02 October 2014 | EP | 2980259 | A1 | |
| | | | | claims, paragraphs [0006]-[0012] | | | |
| | | | | US | 2016/0024632 | A1 | |
| | | | | CN | 105051238 | A | |
| | | | | JP | 2014-208902 | A | |
| WO | 2023/132350 | A1 | 13 July 2023 | (Family: none) | | | |
| WO | 2024/053669 | A1 | 14 March 2024 | (Family: none) | | | |

Form PCT/ISA/210 (patent family annex) (July 2022)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 2019116531 A

- WO 2020218575 A